# EUROPEAN PATENT SPECIFICATION

(11) **EP 1 366 584 B1**
(45) Date of publication and mention of the grant of the patent: **09.01.2008**
(21) Application number: 02709322.8
(22) Date of filing: 06.02.2002
(51) Int. Cl.: H04J 3/00, H04J 3/06, H04J 3/07

(54) **METHOD FOR TIME SLOT SYNCHRONIZATION**
VERFAHREN FÜR EINE ZEITSCHLITZSYNCHRONISIERUNG
PROCEDE RELATIF A LA SYNCHRONISATION D'INTERVALLES DE TEMPS

(30) Priority: 06.02.2001 US 266475 P
(43) Date of publication of application: 03.12.2003
(73) Proprietor: HARRIS CORPORATION, Melbourne, FL 32919 (US)
(72) Inventor: PRESTON, Shawn, E., Bellevue, WA 98006 (US); FREDERICK, Daniel, J., Bothell, WA 98012 (US)
(74) Representative: Liesegang, Eva
(86) International application number: PCT/US2002/003193
(87) International publication number: WO 2002/063805

(56) References cited:
- US-A- 4 852 090
- US-A- 5 072 445
- US-A- 5 177 740
- US-A- 5 768 269
- US-A- 5 809 009
- NEUNER HK BILITZA H ET AL: "SYNCHRONISATION EINER MOBILSTATION IM GMS-SYSTEM DMCS 900 (D-NETZ) SYNCHRONISATION OF MOBILE STATION IN GMS TDMA MOBILE RADIO COMMUNICATION SYSTEM DMCS 900 (D-NETZ)" FREQUENZ, SCHIELE UND SCHON GMBH. BERLIN, DE, vol. 47, no. 3/4, March 1993 (1993-03), pages 66-72, XP000363421 ISSN: 0016-1136

## Description

### BACKGROUND OF THE INVENTION

This application is related to wireless communication systems and more specifically to a method and apparatus for managing processes associated with time slot synchronization in TDM systems over an extended time.

As is known in the art, Time Division Multiplex (TDM) wireless communication systems increase the capacity of a single communication channel by temporally partitioning the channel into frames, which are further partitioned into time slots. Users of the system may then be allocated at least one time slot within a plurality of frames to complete the transmission or the reception of a message. In order to provide a reliable quality of service between a transmitting user and a receiving user, the receiving system must be substantially synchronized to the boundaries of the transmitting time slots. In this manner, the performance of the receiving system is maximized with regard to the transmitting information. However, changes in the environment between the transmitter and the receiver may introduce substantial delays in the received signal that consequently effect the quality of service of the received signal. For example, changes in network timing may introduce a time delay in all the data of one or more frames. Changes in symbol timing may introduce a distortion in symbols as the point of decoding symbols is altered. Similarly, changes in frequency may reduce the amplitude of the received signal as the received signal may be shifted to an undesired portion of a filter characteristic. Hence, the wireless system provides for a periodic or dynamic execution of a plurality of processes that remove errors introduced in the time slots and synchronize the time slot to a known reference.

Synchronization processing of TDM systems is well known in the art. For example, TDM systems may be required to perform one or more processes such as AGC (Automatic Gain Control) convergence processing, symbol timing convergence processing, automatic frequency control (AFC) convergence processing, filter equalization processing and carrier recovery processing to achieve synchronization. Thus, depending upon the nature and type of error introduced, it may be necessary to perform one or more synchronization processes to achieve a desired level of synchronization.

To perform synchronization processing, a time is available is made available that is dedicated to non-data or non-payload functions. However, when one or more of the processes requires a time that exceeds the available time, the overall time slot synchronization process may not be completed. In this case, each of the synchronization processes are then repeatedly performed over an extended period until they are all successfully completed. In this case, a time slot may remain out of synchronization for an extended period of time while each of the processes is executed and completed. When the errors are significantly large, the time slot may remain continuously out of synchronization.

US-A-5,177,740 discloses frame/slot synchronization of a received TDMA signal wherein a temporal position of a reference feature associated with a desired time slot is determined. The desired time slot is but one of a plurality of time slots that comprise a frame. Verification that the acquired temporal position corresponds to the desired time slot is performed by repetitively estimating a temporal position of the reference feature in a subsequent frame and sampling the subsequent frame at the estimated temporal position to determine if the reference feature is present. The temporal position of the reference feature of the desired time slot relative to the frame is maintained over a plurality of received frames.

US-A-4,852,090 discloses a method for reducing multipath interference distortion in a TDMA communication system. A transmitter forwards one or more equalizer synchronization words, time-multiplexes this formatted user message with at least one other user message and transmits the combined signal. The receiving station receives the transmitted TDMA signal, de-multiplexes the first user message from the other user messages, and equalizes the time delay spread characteristics of the data word portion of the first user message.

A further synchronizing method for digital mobile telephone system has been described by H. Neuner et al.: "Synchronisation einer Mobilstation im GMS-System DMCS 900 (D-Netz)", Frequenz 47 (1993) 3-4, page 66-72.

Hence, a method and apparatus for managing time slot synchronization over an extended period of time by retaining information regarding prior executed and successfully completed processes is needed.

The present invention provides a method for performing at least one of a plurality of synchronization processes according to claim 1 and a computer program according to claim 13.

### BRIEF DESCRIPTION OF THE FIGURES

Figure 1 illustrates a point-to-multipoint network system;
Figure 2 illustrates a format of time slots in a TDM system;
Figure 3 illustrates a flow chart of a process for managing time slot synchronization in accordance with the principles of the invention;
Figure 4 illustrates a flow chart of a process for managing synchronization in accordance with one aspect of the process shown in Figure 3;
Figure 5 illustrates a series for achieving synchronization over a plurality of time periods in accordance with the principles of the invention; and
Figure 6 illustrates an apparatus for executing the processing depicted in Figure 3.

It is to be understood that these drawings are solely for purposes of illustrating the concepts of the invention and are not intended as a level of the limits of the invention. It will be appreciated that the same reference numerals, possibly supplemented with reference characters where appropriate, have been used throughout to identify corresponding parts.

### DETAILED DESCRIPTION OF THE INVENTION

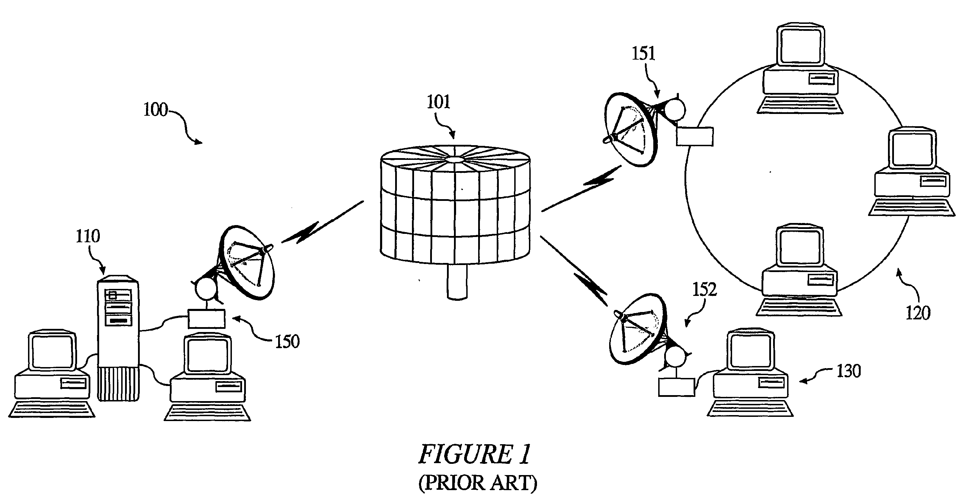

Figure 1 illustrates an exemplary wireless point-to-multipoint wireless communication system 100 for providing high speed bridging of a physical gap between a plurality of processor-based systems. In this illustrative system, process-based systems 100, 120 and 130 utilizing respective antenna elements 150, 151 and 152 communicate with centralized communication hub 101 via at least one airlink channel. Hub 101 is an omni-directional antenna array having a plurality of individual narrow beam directional antennas, each having a predetermined communication lobe that defines the antenna's spatial coverage. The antenna elements are arranged in a horizontal plane azimuthally about an axis of hub 101 to achieve an omni-directional coverage of hub 101.

Each antenna element may be operative to receive and/or transmit information or data on one or more frequency channels. In one aspect, the system may operate in a half-duplex mode, where separate frequencies are used to receive and transmit information. Alternatively, the system may operate in a full-duplex mode where a same frequency is used to receive and transmit information. Time Division Multiplex (TDM) systems increase system capability by temporally partitioning a frequency into time frames of fixed duration. Each frame is further temporally partitioned into a predetermined number of time slots. In operation, a user generally is allocated a time slot over a plurality of frames for transmission or reception of data.

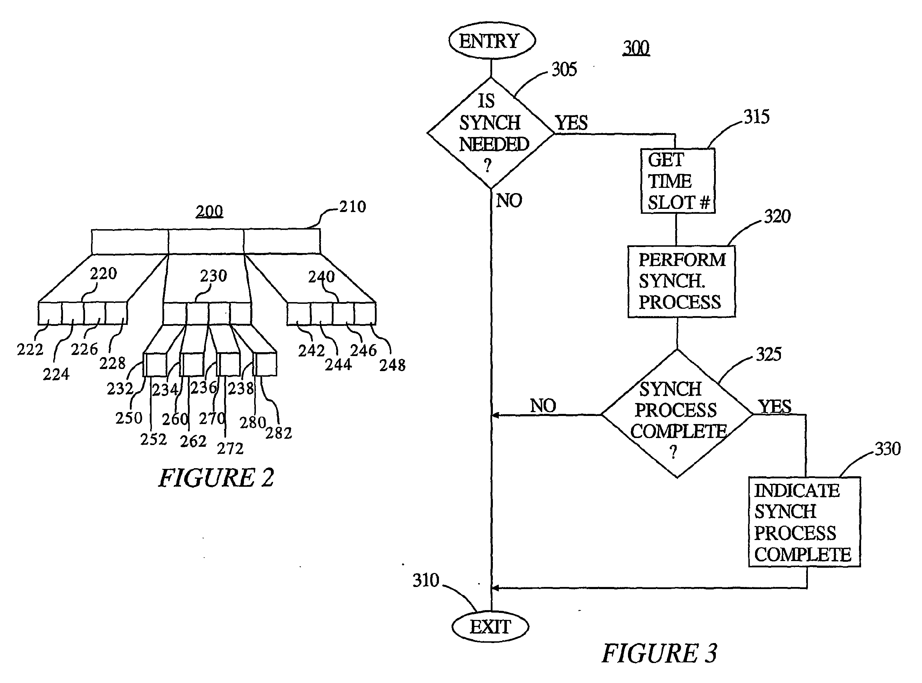

Figure 2 illustrates a TDM system time 210, which is temporally partitioned into three frames 220, 230 and 240. Each time frame is further partitioned into four time slots such that frame 220 is partitioned into time slots 222, 224, 226 and 228, frame 230 is partitioned into time slots 232, 234, 236 and 238 and frame 240 is partitioned into time slots 242, 244, 246 and 248. Each of the depicted time slots is then partitioned into a period of time to transmit command/control/procedural functions and a time to transmit payload or data. One command/control/procedural function is allocated to synchronization of the time slot to a known reference. In this example, time slot 230 is shown partitioned into command time 250 and payload time 252. Time slot 234 is partitioned into command time 260 and payload time 262. Time slot 236 is partitioned into command time 270 and payload time 272. And time slot 238 is partitioned in command time 280 and payload time 282. Thus, during that time allocated for synchronization within command time 250, 260, 270, or 280, each process necessary to determine and compensate for errors that caused a lack of time slot synchronization may be performed and completed to achieve synchronization.

Figure 3 illustrates a flow chart of an exemplary process 300 for achieving time slot synchronization in accordance with the principles of the present invention. In this process, a determination is made at block 305 (is synch needed?) whether synchronization is needed. If the answer is negative, then processing ends at block 310 (exit). If, however, the answer is affirmative, then a time slot number is obtained at block 315 (get time slot #). At block 320, synchronization process is initiated (perform synch. process).

At block 325 (synch. process complete?) a determination is made whether the synchronization process for the selected time slot is completed. If the answer is in the negative, then process 300 is ended at block 310. However, if the answer is affirmative, then an indication of synchronization process completion is made at block 330 (indicate synch process complete). Process 300 is then ended at block 310.

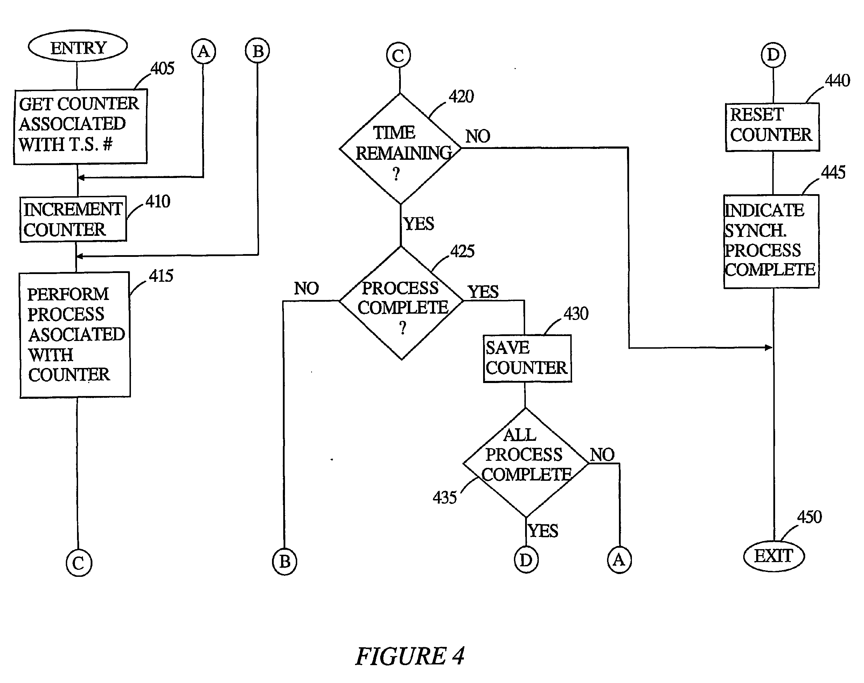

Figure 4 illustrates a flow chart of an exemplary synchronization processing 400 in accordance with the principles of the invention. In this process, a counter associated with a corresponding time slot is obtained at block 405 (get counter associated with T.S. #). At block 410, the counter associated with the corresponding time slot is incremented (increment counter). At block 415 (perform process associated with counter), a synchronization process associated with the time slot counter is selected and executed.

At block 420 (time remaining), a determination is made whether time remains available for the continued execution of the selected process. If the answer is negative, process 400 is ended at block 450. However, if the answer is affirmative, a determination is made at block 425 (process complete?) whether the selected process is completed. If the answer is in the negative, then the execution of the selected process is continued at block 415. If, however, the answer at block 425 is affirmative, then the time slot associated counter is saved at block 430 (save counter).

At block 435 (all process complete), a determination is made whether all processes necessary for synchronization have been completed. If the answer is negative, then the time slot counter is incremented at block 410 and a next/subsequent process is selected for execution.

If, however, the answer is affirmative, i.e., synchronization completed, then the time slot counter is reset to a nominal value at block 440 (reset counter). An indication of synchronization completion for the selected time slot is made at block 445. (indicate synch process complete).

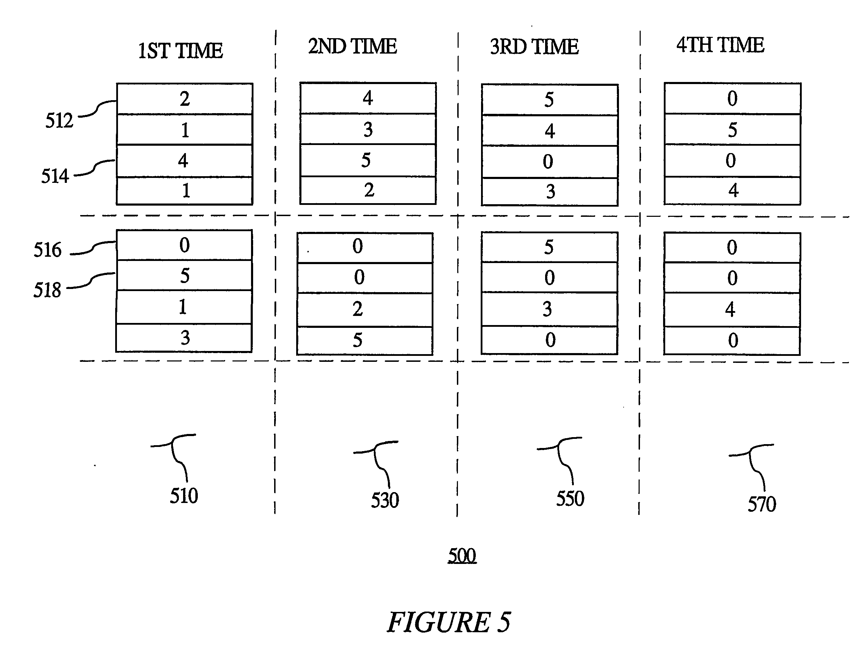

Figure 5 illustrates an exemplary sequence 500 for achieving synchronization for each of a plurality of time slots over a plurality of time periods. In this illustrative example, counters associated with each time slot in a frame are maintained and updated to manage the level of synchronization achieved for each time slot over an extended period of time. In this example, the extended period of time is composed of four time periods, represented as 1^{st} time 510, 2^{nd} time 530, 3^{rd} time 550 and 4^{th} time 570. Furthermore, synchronization is achieved when six synchronization processes are successfully completed. It would be understood by those skilled in the art that although six synchronization processes are depicted in the illustrative example, synchronization may be achieved when any number of synchronization processes are completed, or determined not necessary to be performed.

In this example, during 1^{st} time 510, a counter associated with time slot 512 indicates, by a value of two, that two synchronization processes have been completed. Similarly, a counter associated with time slot 514 indicates, by a value of one (1), that one synchronization process has been completed. Also, with regard to time slot 516, a counter associated with time slot 516 is set to a nominal value of zero (0), which in this example, indicates that synchronization has been completed and no further processing is necessary. Furthermore, with regard to time slot 518, an associated counter indicates, by a value of five (5), that five synchronization processes have been completed.

Referring now to 2^{nd} time 530, time, during this time slot 512 two additional synchronization processes have been completed, as indicated by the value four (4) for the counter associated with time slot 512. Similarly for time slot 514, one additional synchronization process has been achieved, as represented by the value five (5) for the associated counter. With regard to time slot 516, this time slot remains in synchronization as represented by the continued value of zero (0) for the corresponding counter. However, time slot 518 has achieved synchronization as indicated by the value zero (0) for its associated counter. In this embodiment of the invention, a corresponding time slot counter is reset to a nominal value of zero (0) in anticipation of subsequent synchronization processing associated with the time slot. As will be appreciated, an associated counter may be set to any other nominal value that may be appropriate for alternative counter incrementing algorithms.

Furthermore, an indicator (not shown) may be set to indicate the completion of synchronization process corresponding to the time slot 518. An indicator of synchronization completion may be contained in a location separate from an associated counter, or may be merged with an associated counter. For example, a value of "10" may be used to indicate synchronization completion for a selected time slot, wherein "1" represents an indicator of synchronization and "0" represents a counter. As will be understood by those skilled in the art, time slots may independently experience errors that require some form of synchronization processing be performed. Hence, an indication of lack of synchronization may occur independently for each time slot within a frame or may occur for synchronization of all or selected time slots in the frame. In one aspect, altering the state of the indicator associated with each time slot may indicate a lack of synchronization.

Continuing with the example of synchronization depicted in Figure 5, at the completion of 3rd time 550, time slot 512, as indicated by the value of five (5) for the associated counter has completed five synchronization processes. With regard to time slot 514 a value of zero (0) for the associated counter indicates that synchronization is achieved. As discussed, the associated counter is set to a zero (0) value in anticipation of subsequent synchronization processing associated with time slot 514. Furthermore, an indicator (not shown) is set to indicate the completion of synchronization process corresponding to the associated time slot.

Further illustrated is that between 2^{nd} time 530 and 3^{rd} time 570 that with regard to time slot 516, the process illustrated in Figure 3 was executed, as indicated by the changed value of the associated counter. In this case, at the completion of 3^{rd} time 570, five synchronization processes, as indicated by the value five (5) for the associated counter, were executed. The execution of these processes is necessary as an indication of a lack of synchronization of time slot 516 was indicated during these time periods.

With regard to time slot 518, this time slot remains in synchronization by the continued value of zero (0) for the associated counter.

With regard to 4^{th} time 517, time slots 512 and 516 both achieve synchronization as indicated by corresponding associated counters having a zero (0) value. Furthermore, an indicator (not shown) may be set to indicate the completion of synchronization process corresponding to the associated time slot. With regard to time slots 514 and 518, these time slots remain in synchronization as indicated by the value of zero (0) for the respective associated counter.

As will be understood by those skilled in the art, in a preferred embodiment, any one of the desired synchronization processing may be selected determined and executed in contiguous time slots. In another aspect synchronization process may be selected and determined during non-contiguous time slots. In another aspect of the invention, synchronization processing may be performed on a periodic basis, such as at a frame rate.

Although the exemplary progression of achieved levels of synchronization is shown in Figure 5 operating on each time slot within a frame independently, it would be easily understood by those skilled in the art how to alter the illustrated process to perform selected synchronization processes on all or selected time slots in all or selected time frames or frames.

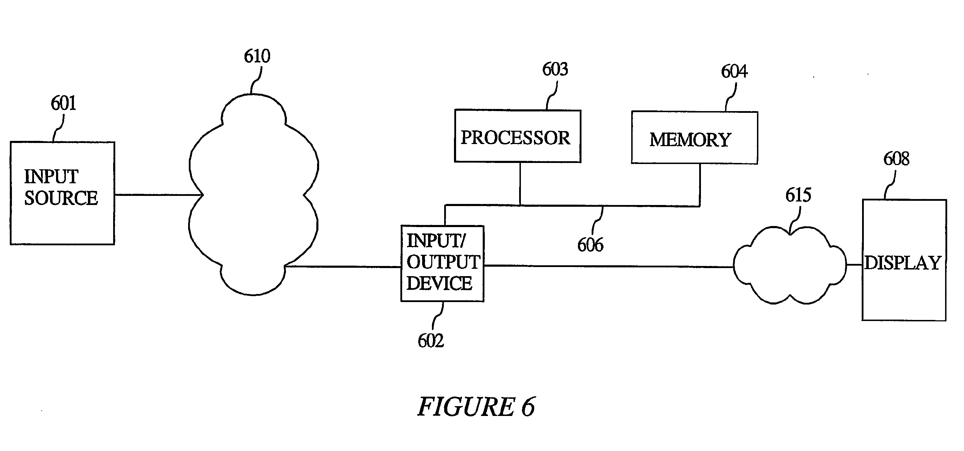

Figure 6 illustrates an exemplary embodiment of an apparatus 600 that may be used for implementing the principles of the present invention. Apparatus 600 may represent a desktop, laptop or palmtop computer, a personal digital assistant (PDA), etc., as well as portions or combinations of these and other devices. Apparatus 600 may contain one or more input/output devices 602, processors 603 and memories 604, which may access one or more sources 601 that are in communication with a central station, for example. Sources 601 may alternatively be accessed over one or more network connections 610, e.g., a global computer communications network such as the Internet, a wide area network, a metropolitan area network, a local area network, a terrestrial broadcast system, a cable network, a satellite network, a wireless network, or a telephone network, as well as portions or combinations of these and other types of networks. Network connections 610 may also be representative of a PCI, ISA, microchannel communication bus, one or more internal connections of a circuit, circuit card or other apparatus, as well as portions and combinations of these and other communication media. Further, processor 603 may cause to be output over network 615 information that may be displayed or presented on display 608.

Input/output devices 602, processors 603 and memories 604 may communicate over a communication medium 606. Communication medium 606 may represent, for example, a bus, such as a DMA, ISA, PCI, etc., a communication network, one or more internal connections of a circuit, circuit card or other apparatus, as well as portions and combinations of these and other communication media. Data from sources 601 is processed in accordance with one or more software programs that may be stored in memories 604 and executed by processors 603 in order to manage synchronization processing for each time slot. As would be appreciated, processors 603 may be any means, such as general purpose or special purpose computing system, or may be a hardware configuration, such as a laptop computer, desktop computer, handheld computer, dedicated logic circuit, integrated circuit, Programmable Array Logic (PAL), Application Specific Integrated Circuit (ASIC), etc., that provides a known output in response to known inputs.

In a preferred embodiment the present invention may be implemented by computer readable code executed by processor 603. The code may be stored in the memory 604 or read/downloaded from a memory medium such as a CD-ROM, magnetic or optical disk drive or floppy disk. In other embodiments, hardware circuitry may be used in place of, or in combination with, software instructions to implement the invention. For example, the elements illustrated herein may also be implemented as discrete hardware elements.

Although the invention has been described in a preferred form with a certain degree of particularity, it is understood that the present disclosure of the preferred form has been made only by way of example, and that numerous changes in the details of construction and combination and arrangement of parts may be made without departing from the scope of the invention as hereinafter claimed. It is intended that the patent shall cover, by suitable expression in the appended claims, those features of patentable novelty that exist in the invention disclosed. Furthermore, although the term channel is used herein with regard to frequency, it would be understood by those skilled in the art that the term channel may be readily applied to a time slot or a frequency. Thus, although the term channel is used in connection with frequency, it is not intended that the term be limited solely to frequency. Rather, it is contemplated to be within the scope of the invention that the term channel may also refer to one or more time slots on one or more frequencies.

## Claims

1. A method for performing a plurality of different synchronization processes for time slot synchronization for selected time slots (222-228; 232-238; 242-248) contained in a TDM communication system (100), said time slots having a synchronization period of time (250; 260; 270) allocated for the execution of any one of said plurality of synchronization processes, said method comprising the steps of:
a. selecting a first desired one of said plurality of synchronization processes (200);
b. executing (320) said first selected synchronization process (200) in said allocated synchronization period (250; 260; 270), whereby
said execution is repeatedly performed in corresponding allocated synchronization period (250; 260; 270) of subsequent time slots (222-228; 232-238; 242-248) over one or more frames when said first execution is not completed at a termination of corresponding allocated synchronization period (250; 260; 270), and
a further desired one of said plurality of synchronization processes (200) is selected and executed when said first execution has been completed before a termination of corresponding allocated synchronization period (250; 260; 270);
c. retaining information regarding prior executed and successfully completed synchronization processes to determine whether all of the selected synchronization processes have been completed; and
d. providing (330) an indicator when all of said selected synchronization processes are completed.

2. The method as recited in claim 1 further comprising the step of:
repeating steps a-d while time remains available in said allocated synchronization period of time.

3. The method as recited in claim 1 or 2, wherein said subsequent time slots are contiguous.

4. The method as recited in claim 1 or 2, wherein said subsequent time slots are non-contiguous

5. The method as recited in one of the preceding claims, further comprising the step of repeating steps a-d for each of said time slots requiring synchronization.

6. The method as recited in one of the preceding claims, further comprising the step of:
performing steps a-d when time slot synchronization is necessary.

7. The method as recited in one of the preceding claims, further comprising the step of:
providing a second indicator when said time slot synchronization is completed.

8. The method as recited in one of the preceding claims, wherein the step of selecting one of said processes is based upon a counter associated with said selected time slot.

9. The method as recited in claim 8, wherein said counter is incremented in modulo (n) arithmetic, wherein the value of n is substantially equal to the number of said plurality of processes required for time slot synchronization of said selected time slot.

10. The method as recited in claim 1, further comprising the step of:
repeating steps a-d for each of selected ones of said time slots.

11. The method as recited in claim 8, further comprising the step of:
resetting said counter when said time slot synchronization is completed.

12. A computer program comprising software code stored on a data carrier for executing the method of one of the preceding claims when executed on a computer.

## Patentansprüche

1. Verfahren zum Ausführen mehrerer verschiedener Synchronisierungsprozesse für eine Zeitschlitzsynchronisierung für ausgewählte Zeitschlitze (222-228; 232-238; 242-248), die in einem TDM-Kommunikationssystem (100) enthalten sind, wobei die Zeitschlitze zeitliche Synchronisierungsperioden (250; 260; 270) haben, die für die Ausführung jedes von mehreren Synchronisierungsprozessen zugewiesen sind, mit folgenden Verfahrensschritten:
a. Auswählen eines ersten gewünschten der mehreren Synchronisierungsprozesse (200);
b. Ausführen (320) des ersten ausgewählten Synchronisierungsprozesses (200) in der zugewiesenen Synchronisierungsperiode (250; 260; 270), wobei
die Ausführung in der entsprechenden zugewiesenen Synchronisierungsperiode (250; 260; 270) aufeinander folgender Zeitschlitze (222-228; 232-238; 242-248) während eines oder mehrere Frames durchgeführt wird, wenn die erste Ausführung am Ende der entsprechenden zugewiesenen Synchronisierungsperiode (250; 260; 270) nicht abgeschlossen ist, und
ein weiterer gewünschter der mehreren Synchronisierungsprozesse (200) ausgewählt und ausgeführt wird, wenn die erste Ausführung beendet wurde, bevor eine entsprechende zugewiesene Synchronisierungsperiode (250; 260; 270) beendet ist;
c. Zurückbehalten von Informationen in Bezug auf zuvor ausgeführte und erfolgreich beendete Synchronisierungsprozesse, um zu ermitteln, ob alle der ausgewählten Synchronisierungsprozesse abgeschlossen wurden; und
d. Vorsehen (330) eines Indikators, wenn alle der ausgewählten Synchronisierungsprozesse abgeschlossen sind.

2. Verfahren nach Anspruch 1, mit dem weiteren Schritt:
Wiederholen der Schritte a-d, wenn in der zugewiesenen zeitlichen Synchronisierungsperiode Zeit übrig bleibt.

3. Verfahren nach Anspruch 1 oder 2, wobei die aufeinander folgenden Zeitschlitze benachbart sind.

4. Verfahren nach Anspruch 1 oder 2, wobei die aufeinander folgenden Zeitschlitze nicht benachbart sind.

5. Verfahren nach einem der vorangehenden Ansprüche, mit dem weiteren Schritt des Wiederholens der Schritte a-d für jeden der Zeitschlitze, der Synchronisierung benötigt.

6. Verfahren nach einem der vorangehenden Ansprüche, mit dem weiteren Schritt des Ausführens der Schritte a-d, wenn die Zeitschlitzsynchronisierung notwendig ist.

7. Verfahren nach einem der vorangehenden Ansprüche, mit dem weiteren Schritt des Vorsehens eines zweiten Indikators, wenn die Zeitschlitzsynchronisierung abgeschlossen ist.

8. Verfahren nach einem der vorangehenden Ansprüche, wobei der Schritt des Auswählens eines der Prozesse auf einen Zähler gestützt wird, der dem ausgewählten Zeitschlitz zugeordnet ist.

9. Verfahren nach Anspruch 8, wobei der Zähler in einer Modulo (n) Arithmetik inkrementiert wird, wobei der Wert n im Wesentlichen gleich der Anzahl der mehreren Prozesse ist, welche für die Zeitschlitzsynchronisierung des ausgewählten Zeitschlitzes notwendig sind.

10. Verfahren nach Anspruch 1, mit dem weiteren Schritt des Wiederholens der Schritte a-d für jeden der ausgewählten Zeitschlitze.

11. Verfahren nach Anspruch 8, mit dem weiteren Schritt des Zurücksetzens des Zählers, wenn die Zeitschlitzsynchronisierung abgeschlossen ist.

12. Ein Computerprogramm, welches Softwarecode umfaßt, der auf einem Datenträger gespeichert ist, zum Ausführen des Verfahrens nach einem der vorangehenden Ansprüche, wenn es auf einem Computer ausgerührt wird.

## Revendications

1. Procédé d'exécution d'une pluralité de processus de synchronisation différents pour la synchronisation d'intervalles de temps pour des intervalles de temps sélectionnés (222-228 ; 232-238 ;242-248) contenus dans un système de communication TDM (100), lesdits intervalles de temps ayant une période de synchronisation (250 ; 260 ; 270) attribuée pour l'exécution de n'importe quel processus parmi ladite pluralité des processus de synchronisation, ledit procédé comprenant les étapes consistant à :
a) sélectionner un premier processus souhaité parmi ladite pluralité de processus de synchronisation (200) ;
b) exécuter (320) ledit premier processus de synchronisation sélectionné (200) pendant ladite période de synchronisation attribuée (250 ; 260 ; 270), moyennant quoi
ladite exécution est effectuée de manière répétée au cours de la période de synchronisation attribuée correspondante (250 ; 260 ; 270) d'intervalles de temps subséquents (222-228 ; 232-238 ; 242-248) sur une ou plusieurs trames quand ladite première exécution n'est pas achevée à la fin d'une période de synchronisation attribuée correspondante (250 ; 260 ; 270) ; et
un autre processus souhaité de ladite pluralité de processus de synchronisation (200) est sélectionné et exécuté quand ladite première exécution a été terminée avant la fin d'une période de synchronisation attribuée (250 ; 260 ; 270) ;
c) retenir des informations concernant des processus de synchronisation exécutés et complétés avec succès antérieurement pour déterminer si tous les processus de synchronisation sélectionnés ont été terminés ; et
d) fournir (330) un indicateur quand tous lesdits processus de synchronisation sélectionnés sont terminés.

2. Procédé selon la revendication 1, comprenant en outre l'étape consistant à :
répéter les étapes a à d quand il reste du temps disponible dans ladite période de synchronisation attribuée.

3. Procédé selon la revendication 1 ou 2, dans lequel lesdits intervalles de temps sont contigus.

4. Procédé selon la revendication 1 ou 2, dans lequel lesdits intervalles de temps subséquents ne sont pas contigus.

5. Procédé selon l'une quelconque des revendications précédentes, comprenant en outre l'étape consistant à répéter les étapes a à d pour chacun des intervalles de temps nécessitant une synchronisation.

6. Procédé selon l'une quelconque des revendications précédentes, comprenant en outre l'étape consistant à : exécuter les étapes a à d quand une synchronisation d'intervalles de temps est nécessaire.

7. Procédé selon l'une quelconque des revendications précédentes, comprenant en outre l'étape consistant à : fournir un second indicateur quand ladite synchronisation d'intervalles de temps est terminée.

8. Procédé selon l'une quelconque des revendications précédentes, dans lequel l'étape consistant à sélectionner l'un desdits processus est basée sur un compteur associé audit intervalle de temps sélectionné.

9. Procédé selon la revendication 8, dans lequel ledit compteur est incrémenté dans une opération arithmétique modulo (n), où la valeur de n est sensiblement égale au nombre de ladite pluralité de processus nécessaires à la synchronisation d'intervalles de temps dudit intervalle de temps sélectionné.

10. Procédé selon la revendication 1, comprenant en outre l'étape consistant à :
répéter les étapes a à d pour chacun des intervalles de temps sélectionnés.

11. Procédé selon la revendication 8, comprenant en outre l'étape consistant à :
remettre à zéro ledit compteur quand ladite synchronisation d'intervalles de temps est terminée.

12. Programme informatique comprenant un code logiciel mémorisé sur un support de données pour exécuter le procédé selon l'une quelconque des revendications précédentes quand il est exécuté sur un ordinateur.
